# EUROPEAN PATENT APPLICATION

(11) **EP 4 722 899 A1**
(43) Date of publication of application: **08.04.2026**
(21) Application number: 24814866.0
(22) Date of filing: 08.02.2024
(51) Int. Cl.: G06F 8/65

(54) **INFORMATION PROCESSING METHOD, INFORMATION PROCESSING DEVICE, AND PROGRAM**

(30) Priority: 30.05.2023 JP 2023088866
(71) Applicant: Panasonic Intellectual Property Management Co., Ltd., Kadoma-shi, Osaka 571-0057 (JP)
(72) Inventor: NAKAOKA, Hideaki, Kadoma-shi, Osaka 571-0057 (JP); HAGA, Tomoyuki, Kadoma-shi, Osaka 571-0057 (JP); UJIIE, Yoshihiro, Kadoma-shi, Osaka 571-0057 (JP); AKIMOTO, Shinya, Kadoma-shi, Osaka 571-0057 (JP); AOSHIMA, Hatsuho, Kadoma-shi, Osaka 571-0057 (JP)
(74) Representative: Grünecker Patent- und Rechtsanwälte PartG mbB
(86) International application number: PCT/JP2024/004348
(87) International publication number: WO 2024/247379

(57) **Abstract**

An information processing method executed using a computer in a vehicle 100 that switches whether or not each of equipped functions is to be made operable, depending on whether or not a user of the vehicle 100 has a contract for the function. The information processing method includes: a detection step S11 of detecting a new addition of software for operating one or more functions; a determination step S14 of determining whether or not the user has a contract for the function operated by the software, the new addition of which has been detected; an acquisition step of acquiring software information corresponding to the software for which it is determined that the user has a contract; and update steps (step S15, step S16, and step S17) of updating a software information list of functions operable in the vehicle by adding the acquired software information.

## Description

### Technical Field

The present disclosure relates to an information processing method, an information processing device, and a program.

### Background Art

PTL 1 describes a technique that uses, when the software called container is transmitted to a device, a change prohibited region provided in the software to appropriately provide information related to the vulnerability of software included in the change prohibited region (hereinafter, it is also simply referred to as vulnerability information) by ensuring that the change prohibited region is not changed. There is a need for information processing techniques for appropriately managing software installed in the device, including detection of the vulnerability of software by using appropriately transmitted vulnerability information as described in PTL 1.

### Citation List

### Patent Literature

PTL 1: International Publication No. WO2021/260753

### Summary of Invention

### Technical Problem

The present disclosure provides an information processing method or the like for more appropriately managing software.

### Solution to Problem

An information processing method according to an aspect of the present disclosure is an information processing method executed using a computer in a vehicle that switches whether or not each of equipped functions is to be made operable, depending on whether or not a user of the vehicle has a contract for the function. The information processing method includes: a detection step of detecting a new addition of software for operating one or more functions; a determination step of determining whether or not the user has a contract for the function operated by the software, the new addition of which has been detected; an acquisition step of acquiring software information corresponding to the software for which it is determined that the user has a contract; and an update step of updating a software information list of functions operable in the vehicle by adding the acquired software information.

An information processing device according to another aspect of the present disclosure is an information processing device mounted on a vehicle that switches whether or not each of equipped functions is to be made operable, depending on whether or not a user of the vehicle has a contract for the function. The information processing device includes: a detection unit that detects a new addition of software for operating one or more functions; a determination unit that determines whether or not the user has a contract for the function operated by the software, the new addition of which has been detected; an acquisition unit that acquires software information corresponding to the software for which it is determined that the user has a contract; a storage unit that stores a software information list of functions operable in the vehicle; and an update unit that updates the stored software information list by adding the acquired software information.

A program according to one aspect of the present disclosure is a program for making a computer execute the information processing method described above.

Note that general or specific aspects described above may also be implemented as a device, an integrated circuit, a computer program, or a non-transitory computer-readable recording medium such as a CD-ROM, or implemented as any combination of a device, an integrated circuit, a computer program, and a non-transitory computer-readable recording medium.

### Advantageous Effects of Invention

With the information processing method and the like in the present disclosure, software can be more appropriately managed.

### Brief Description of Drawings

[Fig. 1] Fig. 1 is a block diagram showing an example of a functional configuration of an information processing system according to an embodiment.
[Fig. 2] Fig. 2 is a flowchart showing an example of an operation for adding hardware in the information processing system according to the embodiment.
[Fig. 3] Fig. 3 is a diagram showing an example of an SBOM and an available SBOM of the information processing system according to the embodiment.
[Fig. 4] Fig. 4 is a diagram showing an example of software information of software for operating additional hardware of the information processing system according to the embodiment.
[Fig. 5] Fig. 5 is a diagram showing an example of SFOP information of the information processing system according to the embodiment.
[Fig. 6] Fig. 6 is a diagram showing changes in the SBOM, the available SBOM and the S/W information of the information processing system according to the embodiment.
[Fig. 7] Fig. 7 is a diagram showing changes in the SBOM, the available SBOM and the S/W information of the information processing system according to the embodiment.
[Fig. 8] Fig. 8 is a diagram showing changes in the SBOM, the available SBOM and the S/W information of the information processing system according to the embodiment.
[Fig. 9] Fig. 9 is a flowchart showing an example of an operation of re-authentication of the information processing system according to the embodiment.
[Fig. 10] Fig. 10 is a flowchart showing an example of an operation for addressing vulnerability of the information processing system according to the embodiment. Description of Embodiments

### (Summary of present disclosure)

The summary of the present disclosure is as follows.

An information processing method according to a first aspect of the present disclosure is an information processing method executed using a computer in a vehicle that switches whether or not each of equipped functions is to be made operable, depending on whether or not a user of the vehicle has a contract for the function. The information processing method includes: a detection step of detecting a new addition of software for operating one or more functions; a determination step of determining whether or not the user has a contract for the function operated by the software, the new addition of which has been detected; an acquisition step of acquiring software information corresponding to the software for which it is determined that the user has a contract; and an update step of updating a software information list of functions operable in the vehicle by adding the acquired software information.

With such an information processing method, the software for operating hardware (hardware for executing an operable function) actually contracted and available in the vehicle can be managed as software information by the software information list. Therefore, since the software is added, the software that is used even though the software information thereof is not included in the software information list, the software that is not used, due to not having a contract, even though the software information thereof is included in the software information list even though the hardware is provided, and the like are not included in the software information list of the present disclosure, so that it is possible to perform more appropriate software management.

An information processing method according to a second aspect of the present disclosure is the information processing method according to the first aspect of the present disclosure, in which, in the acquisition step, software information corresponding to the software for which it is determined that the user does not have a contract is acquired, and in the update step, the software information list of functions operable in the vehicle is updated by adding, among the acquired software information, the software information corresponding to the software for which it is determined that the user has a contract, and an equipped software information list of functions equipped in the vehicle is updated by adding all of the acquired software information.

Thus, the software can be managed by using a software information list of functions operable in the vehicle, which is separate from the software information list.

An information processing method according to a third aspect of the present disclosure is the information processing method according to the first or second aspect of the present disclosure, in which, in the detection step, the new addition of the software is detected by installing hardware into the vehicle, wherein the hardware is operated by the software and executes the function corresponding to the software.

Thus, with the addition of hardware as a trigger, the software information list can be updated by assuming the addition of software.

An information processing method according to a fourth aspect of the present disclosure is the information processing method according to any one of the first to third aspects of the present disclosure that further includes: a switching detection step of detecting a change in state of one or more pieces of the software from an operable state to an inoperable state; and a deletion update step of updating the software information list by deleting, from the software information list, the software information corresponding to the software whose change in state is detected.

Thus, by detecting the change in state of software to inoperable, the software information of inoperable software can be deleted from the software information list and the software information list can be maintained in a state corresponding to the actual available software.

An information processing method according to a fifth aspect of the present disclosure is the information processing method according to the fourth aspect of the present disclosure, in which, in the switching detection step, the change in state of one or more pieces of the software to inoperable is detected by a change from a state in which the user has a contract for the function operated by the software to a state in which the user does not have the contract for the function operated by the software.

Thus, the change in state of software to inoperable can be detected by the change from a state in which the user has a contract to a state in which the user does not have the contract.

An information processing method according to a sixth aspect of the present disclosure is the information processing method according to the fifth aspect of the present disclosure, in which the software information includes information related to a type of the function operated by the corresponding software.

Thus, the management of software can be performed using information related to the type of the function operated by the software.

An information processing method according to a seventh aspect of the present disclosure is the information processing method according to the sixth aspect of the present disclosure, in which, in the deletion update step, when the information related to the type of the function operated by the software whose change in state is detected satisfies a first condition, the software information corresponding to the software whose change in state is detected is prohibited from being deleted from the software information list.

Thus, it is possible to prevent software information from being deleted from the software information list when the information related to the type of the function operated by the software satisfies the first condition.

An information processing method according to an eighth aspect of the present disclosure is the information processing method according to the seventh aspect of the present disclosure, in which, in the deletion update step, when the information related to the type of the function operated by the software whose change in state is detected satisfies the first condition and a state of the vehicle satisfies a second condition, the software information corresponding to the software whose change in state is detected is prohibited from being deleted from the software information list.

Thus, it is possible to prevent software information from being deleted from the software information list when the information related to the type of the function operated by the software satisfies the first condition and the state of the vehicle satisfies the second condition.

An information processing method according to a ninth aspect of the present disclosure is the information processing method according to any one of the first to eighth aspects of the present disclosure that further includes: a vulnerability management step of using the updated software information list to manage vulnerability of the software for operating the function operable in the vehicle.

Thus, the vulnerability of the software for operating the function operable in the vehicle can be managed using the updated software information list.

An information processing method according to a tenth aspect of the present disclosure is the information processing method according to the ninth aspect of the present disclosure, in which the vulnerability management step is executed every predetermined period.

Thus, the vulnerability of the software for operating the function operable in the vehicle can be managed every predetermined period (i.e., periodically) using the updated software information list.

An information processing device according to an eleventh aspect of the present disclosure is an information processing device mounted on a vehicle that switches whether or not each of equipped functions is to be made operable, depending on whether or not a user of the vehicle has a contract for the function. The information processing device includes: a detection unit that detects a new addition of software for operating one or more functions; a determination unit that determines whether or not the user has a contract for the function operated by the software, the new addition of which has been detected; an acquisition unit that acquires software information corresponding to the software for which it is determined that the user has a contract; a storage unit that stores a software information list of functions operable in the vehicle; and an update unit that updates the stored software information list by adding the acquired software information.

Thus, the same effects as the information processing method described above can be achieved.

A program according to a twelfth aspect of the present disclosure is a program that causes a computer to execute the information processing method according to any one of the first to tenth aspects of the present disclosure.

Thus, the same effects as the information processing method described above can be achieved by using a computer.

Note that general or specific aspects described above may also be implemented as a device, an integrated circuit, a computer program, or a non-transitory computer-readable recording medium such as a CD-ROM, or implemented as any combination of a device, an integrated circuit, a computer program, and a non-transitory computer-readable recording medium.

Hereinafter, an embodiment will be described in detail with reference to the drawings as appropriate. However, more detailed explanation than necessary may be omitted. For example, a detailed description of well-known matters and redundant description of substantially the same configuration may be omitted. This is to avoid unnecessary redundancy of the following description and to facilitate understanding by those skilled in the art.

Note that the inventors of the present invention have provided the accompanying drawings and the descriptions below to facilitate sufficient understanding of the present disclosure by those skilled in the art, and are thus not intended to limit the scope of the subject matter recited in the claims.

### (Embodiments)

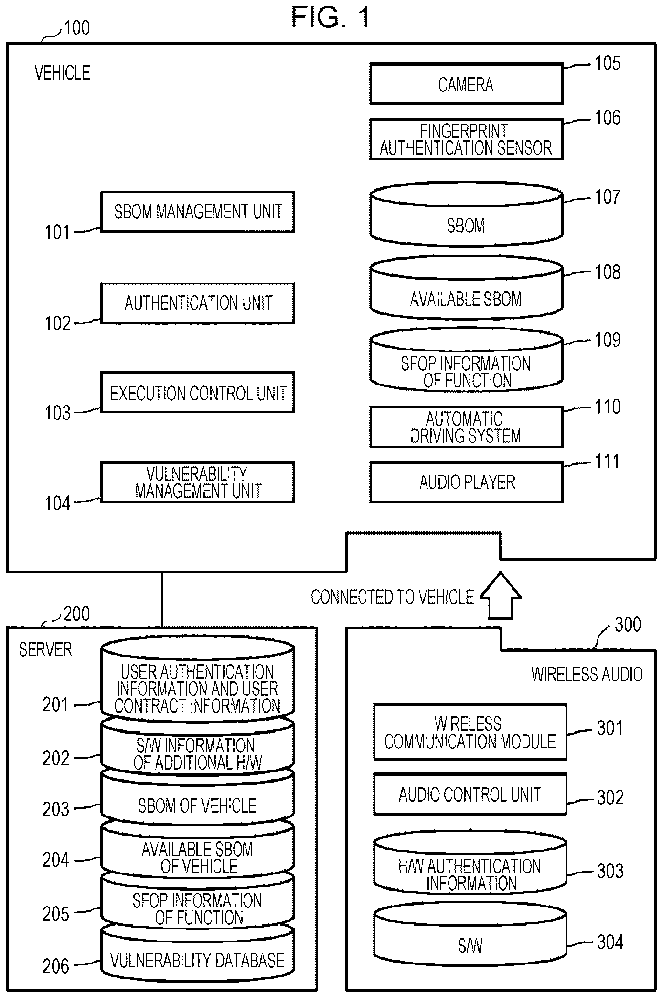

Fig. 1 is a block diagram for explaining the outline of an information processing system according to an embodiment. Fig. 1 shows a vehicle 100, a server 200, and a wireless audio 300, which is an example of added hardware (which may be referred to as H/W hereinafter); these components constituting the information processing system according to the embodiment. Here, an example will be described in which, when the wireless audio 300 is added by being connected to the vehicle 100, operation control software (which may be described as S/W hereinafter) for operating the wireless audio 300 is added as one of a plurality of pieces of software of the vehicle 100.

The S/W added here is an S/W for operating the wireless audio 300, which is one of many pieces of H/W possible to be connected to the vehicle 100. In other words, many pieces of S/W, including the S/W added here, are installed in the vehicle 100, each piece of S/W operating a corresponding one of the many pieces of H/W. Normally, the many pieces of S/W described above are managed by the manufacturer of the vehicle 100 or the like using information on one or more S/W components included in each piece of S/W, such as a software bill of material (SBOM). When there is a defect or the like in the vehicle 100, the SBOM is used by the manufacturer to refer to the SBOM to consider necessary S/W corrections, or to, when the SBOM includes an S/W component with newly discovered vulnerabilities, update the corresponding S/W component. In such a manner, the SBOM is used to manage the S/W installed in the vehicle 100.

On the other hand, in the related art, since it is convenient to manage the SBOM collectively by a server, the SBOM is stored in a server and the like operated by the manufacturer, and is not stored in the vehicle 100. In contrast, the inventors of the present invention have found that if the SBOM is stored in the vehicle, the SBOM can be dynamically changed and used on the vehicle side even when the server cannot be connected or when there is a communication delay; therefore, such an SBOM can be used to verify the vulnerability of the S/W installed in the vehicle with zero trust. The present invention is based on such a finding.

As shown in Fig. 1, the vehicle 100 includes an SBOM management unit 101, an authentication unit 102, an execution control unit 103, a vulnerability management unit 104, a camera 105, a fingerprint authentication sensor 106, an SBOM 107, an available SBOM 108, SFOP information 109 of function, an automatic driving system 110, and an audio player 111. The vehicle 100 is not limited to such a configuration, and one or more components may be omitted from the above configuration. The above configuration included in the vehicle 100 includes a processing unit and a device unit. The processing unit is a virtual functional configuration realized by performing computer processing using an in-vehicle computer, a memory, a program and the like. The device unit is a functional configuration accompanied by a physical device and the like.

The SBOM management unit 101 is a processing unit which updates the SBOM 107 and the available SBOM 108 by, for example, adding new S/W information to or deleting S/W information from the SBOM 107 and the available SBOM 108; in which the SBOM 107 is a list of S/W information corresponding to each of the pieces of S/W installed in the vehicle 100, and the available SBOM 108 is a list of S/W information corresponding to, among S/W installed in the vehicle 100, each of the pieces of S/W available to each user. By detecting the addition of new H/W to the vehicle 100, the SBOM management unit 101 detects the addition of S/W that is accompanied by the addition of the H/W and that operates the H/W. Further, S/W information corresponding to the added S/W is added to the SBOM 107 and the available SBOM 108 to thereby update the SBOM 107 and the available SBOM 108. Further, the SBOM management unit 101 updates the SBOM 107 and the available SBOM 108 individually by adding all of the S/W information corresponding to added S/W to the SBOM 107 and adding, in some cases, only a portion of the S/W information corresponding to added S/W to the available SBOM 108. Note that the SBOM management unit 101 may detect the addition of an S/W instead of detecting the addition of an H/W.

Specifically, the SBOM management unit 101 determines whether or not the function to be executed by the operation of each H/W mounted on the vehicle 100 by the user of the vehicle 100 is a function contracted by the user, and determines, based on the determination result, the S/W information to be added to the available SBOM 108 or deleted from the available SBOM 108. That is, in the present embodiment, the vehicle 100 can switch whether or not each function executed by the equipped H/W is to be made operable depending on whether or not the user of the vehicle 100 has a contract for that function. In the vehicle 100, the management of whether or not each function is to be made operable is determined based on whether or not a user contract for that function exists in user authentication information and user contract information 201 of the server 200. Note that some of the functions equipped in the vehicle 100 do not have the concept of a user contract. The available SBOM 108 also contains the S/W information corresponding to the S/W for operating the H/W for executing the functions that do not have the concept of a user contract (for example, functions used in the basic operation of the vehicle 100, basic functions of the car audio, and the like). Thus, by referring to the available SBOM 108, it is possible to obtain the S/W information available to each current user in real time; and vulnerability management and access control based on the latest information can be performed by using the S/W information even when the user has changed or when the contract has been renewed.

The authentication unit 102 is a processing unit that acquires input information for user authentication by using the camera 105, the fingerprint authentication sensor 106, and the like, and determines whether or not the user using the vehicle 100 is a registered user. When there are a plurality of registered users, the authentication unit 102 also performs processing to identify which of the plurality of registered users is the user who is using the vehicle 100 at that time.

The execution control unit 103 is a processing unit that controls the execution of the S/W mounted on the vehicle. For example, the execution control unit 103 permits the execution of the S/W corresponding to the S/W information included in the available SBOM 108, and does not permit the execution of the S/W corresponding to the S/W information installed in the vehicle 100 but not included in the available SBOM 108. Thus, a part of the H/W is operated by the S/W corresponding to the S/W information included in the available SBOM 108. As described above, since only the S/W information of the S/W corresponding to the functions for which the user has contracted or the functions that do not require the user contracts are included in the available SBOM 108, the execution control unit 103 substantially can operate only the S/W corresponding to the functions operable for the user.

The vulnerability management unit 104 is a processing unit that determines whether or not the S/W installed in the vehicle 100 has a vulnerability, and addresses the vulnerability if necessary. Further, when the vulnerability management unit 104 has addressed the vulnerability, since, for example, the S/W related to addressing the vulnerability is corrected, the vulnerability management unit 104 may instruct the SBOM management unit 101 to update the S/W information of the SBOM 107 and the available SBOM 108.

The camera 105 is a device unit mounted on the vehicle 100 in a posture capable of photographing the face of the user. The camera 105 is used for, for example, facial authentication of the user.

The fingerprint authentication sensor 106 is a device unit mounted on the vehicle 100 at a position where the fingerprint of the user can be detected. The fingerprint authentication sensor 106 is used for, for example, fingerprint authentication of the user.

The camera 105 and the fingerprint authentication sensor 106 are not essential components; alternatively, a microphone used for, for example, voiceprint authentication of the user and/or a vein sensor used for, for example, vein authentication of the user may be provided instead of the camera 105 and the fingerprint authentication sensor 106.

The SBOM 107 is an example of an equipped software information list, and is information stored in a storage unit or the like (not shown). The format and other factors of the SBOM 107 are not particularly limited as long as the S/W information is listed.

The available SBOM 108 is an example of a software information list, and is information stored in a storage unit or the like (not shown). The format and other factors of the available SBOM 108 are not particularly limited as long as the S/W information is listed; however, since the S/W information of the SBOM 107 may be referred to and incorporated into the available SBOM 108, it is preferable that the format of the available SBOM 108 is the same with the format of the SBOM 107.

The SFOP information 109 of function is information related to the classification of each function mounted on the vehicle 100 in terms of safety (S), financial (F), operational (O), and privacy (P). The SFOP information 109 of function is stored in a storage unit or the like (not shown). The SFOP information 109 of function includes, for each function, four values of whether or not the function corresponds to S of the SFOP, F of the SFOP, O of the SFOP, and P of the SFOP; however, the SFOP information 109 of function is not limited to such a configuration. For example, the SFOP information 109 of function may include, for each function, only information of whether or not the function corresponds to S of the SFOP. The reference destination of the SFOP information 109 of function is designated by S/W information included in the SBOM 107 or the available SBOM 108. That is, the determined information of the SFOP information 109 of function is referred to for each S/W information, and the four values of the SFOP for each function are provided.

The automatic driving system 110 is an example of a function for which a contract by the user is required, and is a device unit that includes various sensors, an automatic steering device, and a control device that processes the sensing results to control the automatic steering device. The automatic driving system 110 is, for example, installed in the vehicle 100 by the manufacturer when the vehicle 100 is manufactured.

The audio player 111 is an example of a function for which a contract by the user is required, and is a device unit that includes a sound source data input unit, a speaker, and a drive device that drives the speaker based on the sound source data inputted by the sound source data input unit. The audio player 111 may be, for example, installed in the vehicle 100 by the manufacturer when the vehicle 100 is manufactured, or may be, for example, installed or replaced by a contractor and the like different from the manufacturer by the user.

The server 200 is a data server operated by the manufacturer of the vehicle 100. The server 200 includes user authentication information and user contract information 201, S/W information 202 of additional H/W, an SBOM 203 of vehicle, an available SBOM 204 of vehicle, SFOP information 205 of function, and a vulnerability database 206.

The configurations included in the server 200 are all information stored in a storage unit (not shown) or the like.

The user authentication information and user contract information 201 is a database that links the personal information of the user with authentication information such as a camera image or fingerprint inputted by the user, and links the personal information of the user with the information of the function contracted by the user. The authentication unit 102 refers, with the input information as a query, to the user authentication information and user contract information 201 to read the personal information of the user and the information of the function contracted by the user.

The S/W information 202 of additional H/W is a database of S/W information of one or a plurality of pieces of H/W that can be added to each vehicle model or each vehicle. For example, the manufacturer of the additional H/W who has a contract with the manufacturer of the vehicle 100 previously delivers, to the manufacturer of the vehicle 100, the authentication information to be attached to the additional H/W, as well as the S/W information of the S/W that is stored in the additional H/W and that is for operating the additional H/W, in a manner in which the S/W information is linked with the authentication information. The manufacturer of the vehicle 100 constructs S/W information 202 of additional H/W by the delivered authentication information and S/W information of the S/W for operating the additional H/W. Further, when the additional H/W is connected to the vehicle 100, for example, the authentication unit 102 refers, with the authentication information of the additional H/W as a query, to the S/W information 202 of additional H/W to read the S/W information of the S/W for operating the additional H/W. Thus, the safety that the additional H/W belongs to the additional H/W manufacturer who contracts with the vehicle manufacturer is ensured, and the S/W information of the S/W for operating the additional H/W can be obtained.

The SBOM 203 of vehicle is a database that synchronizes and stores the SBOM 107 of one or more individual vehicles. For example, the SBOM management unit 101 periodically copies and transmits the SBOM 107 to the server 200 to update the SBOM 203 of vehicle.

The available SBOM 204 of vehicle existing in the server 200 is synchronized with the available SBOM 108 in the vehicle 100. For example, the SBOM management unit 101 periodically copies and transmits the available SBOM 108 to the server 200 to update the available SBOM 204 of vehicle. The SBOM 203 of vehicle and the available SBOM 204 of vehicle are provided for each vehicle 100.

The SFOP information 205 of function existing in the server 200 is synchronized with the SFOP information 109 of function provided in the vehicle 100. For example, when updating the SBOM 107 and the available SBOM 108, the SBOM management unit 101 copies the SFOP information 205 of function in the server 200 to update the SFOP information 109 of function. Thus, when the SFOP information 205 of function in the server 200 is updated, the SFOP information 109 of function in the vehicle 100 is automatically kept up to date.

The vulnerability database 206 is a database constructed by collecting information related to the vulnerability of the S/W. The vulnerability database 206 is updated by collecting the information related to the vulnerability of the S/W periodically or as needed.

The wireless audio 300 is an example of the additional H/W; and here the wireless audio 300 is a piece of H/W that enables input of the sound source data from a wireless transmission device to the sound source data input unit of the audio player 111 by performing short-range wireless communication.

The wireless audio 300 includes a wireless communication module 301, an audio control unit 302, H/W authentication information 303, and an S/W 304 for operating the wireless audio 300.

The wireless communication module 301 receives the sound source data from the wireless transmission device by performing short-range wireless communication. The wireless communication module 301 includes an antenna, an amplifier, a signal conversion circuit, and the like.

The audio control unit 302 is a processing unit that converts the sound source data received by the wireless communication module 301 into a form that can be inputted to the sound source data input unit of the audio player 111, and inputs the converted sound source data.

The H/W authentication information 303 is authentication information of the wireless audio 300. When the wireless audio 300 is connected, the authentication unit 102 reads the authentication information from the H/W authentication information 303 and inquires the server 200, thereby confirming that the wireless audio 300 is a genuine product sold by the manufacturer of the additional H/W who has a contract with the manufacturer of the vehicle 100, and reads the S/W information corresponding to the S/W 304 from the S/W information 202 of additional H/W.

The S/W 304 is a piece of S/W for operating the wireless audio 300 on the vehicle 100 side.

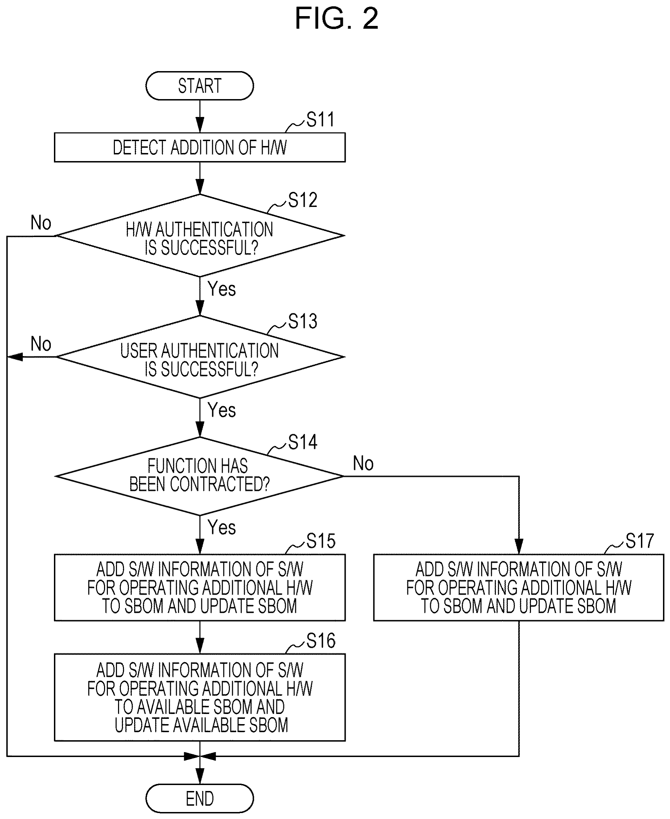

Next, the operation of the information processing system configured as described above will be described with reference to Fig. 2. Fig. 2 is a flowchart showing an example of the operation for adding H/W in the information processing system according to the embodiment. As shown in Fig. 2, for example, when the wireless audio 300 is connected to the vehicle 100, the vehicle 100 detects the addition of H/W by detecting the connection (detection step S11).

The authentication unit 102 reads the authentication information of the wireless audio 300 and queries the server to authenticate the H/W (first authentication step S12). At this time, the vehicle 100 reads the S/W information corresponding to the S/W 304 from the S/W information 202 of additional H/W and acquires the S/W information (acquisition step). If the authentication of the H/W is successful ("Yes" in first authentication step S12), the authentication unit 102 further queries the server using the input information to authenticate the user (second authentication step S13). If it is determined, based on the user authentication, that the user is a suitable user for the use of the vehicle 100, the authentication is successful ("Yes" in second authentication step S13), and it is determined whether or not the user has contracted for the function to be executed by the operation of the wireless audio 300 (determination step S14). For example, in the second authentication step, the authentication unit 102 reads the personal information of the user and the information of the function contracted by the user linked to the personal information. Based on the information of the function contracted by the user, it is determined whether or not the function to be executed by the operation of the wireless audio 300 has been contracted.

If it is determined that the user has contracted for the function to be executed by the operation of the wireless audio 300 ("Yes" in determination step S14), the S/W 304 for operating the wireless audio 300 is installed, and the S/W information of the S/W 304 is added to the SBOM 107 and added to the available SBOM 108 to thereby update the SBOM 107 and the available SBOM 108 (step S15 and step S16).

On the other hand, if it is determined that the user has not contracted for the function to be executed by the operation of the wireless audio 300 ("No" in determination step S14), the S/W 304 for operating the wireless audio 300 is installed, and the S/W information of the S/W 304 is added to the SBOM 107 to thereby update the SBOM 107 (step S17). At this time, although the S/W 304 is installed, the S/W information of the S/W 304 is not added to the available SBOM 108, so that the available SBOM 108 is not updated. The step S15, the step S16, and the step S17 are all included in the update step.

If the authentication of the H/W is not successful ("No" in the first authentication step S12) or if the authentication of the user is not successful ("No" in the second authentication step S13), the process is terminated without performing any further processing.

By performing such an operation, in the vehicle 100, S/W information corresponding to all installed S/W is included in the SBOM 107, and S/W information corresponding to, among installed S/W, the S/W possible to be used due to being contracted by the user is included in the available SBOM 108. Thus, in the vehicle 100, the S/W actually possible to be used can be listed in the available SBOM 108, and by using such an available SBOM 108, it is possible to address the vulnerability of the S/W and perform access control with respect to the actually used S/W. For example, if the SBOM including the S/W information of the S/W installed by the manufacturer is stored only in the server operated by the manufacturer, discrepancies in the S/W information may arise between the SBOM and the actually used S/W when the user adds the H/W. In contrast, as in the present embodiment, by dynamically storing, as the available SBOM 108, the S/W information of the S/W actually used in the vehicle 100, it becomes possible to address the vulnerability of the S/W and perform access control in accordance with the actual use at all times. In other words, it is possible to address attacks on the S/W with zero trust.

Further, the S/W installed in the vehicle 100 can be listed in the SBOM 107 updated separately from the available SBOM 108. When deleting the S/W information from the available SBOM 108 and the like (to be described later), even in a situation where there is no communication between the vehicle 100 and the server 200, the information of the S/W installed in the vehicle 100 can be retained, so that the S/W information can be deleted from the available SBOM 108 without communicating the available SBOM with the server 200. Therefore, even in a situation where there is no communication between the vehicle 100 and the server 200, it is possible to switch off the use of a piece of S/W so as to switch the function operated by such S/W to an inoperable state. Therefore, there is a merit of improving the responsiveness by providing the SBOM 107 separately from the available SBOM 108.

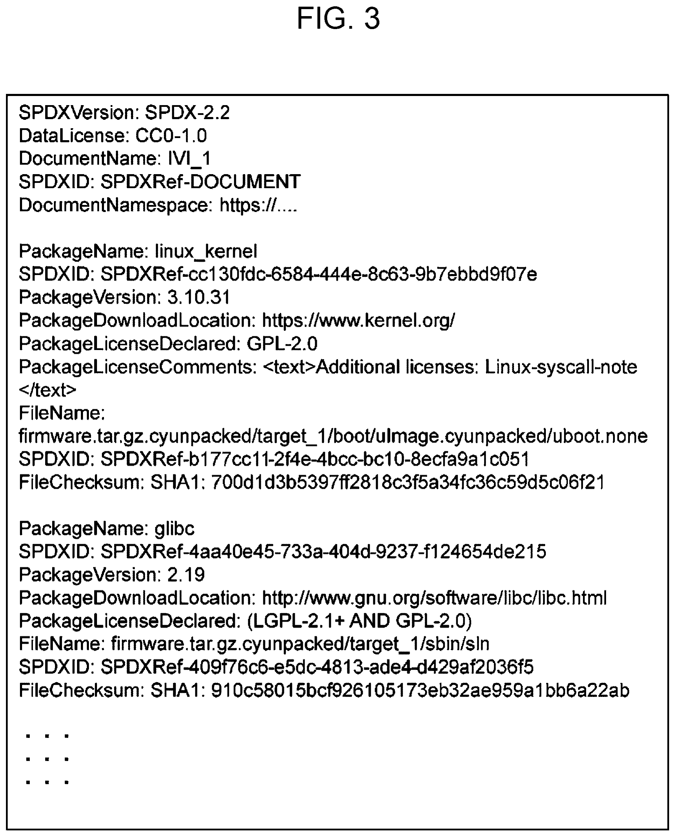

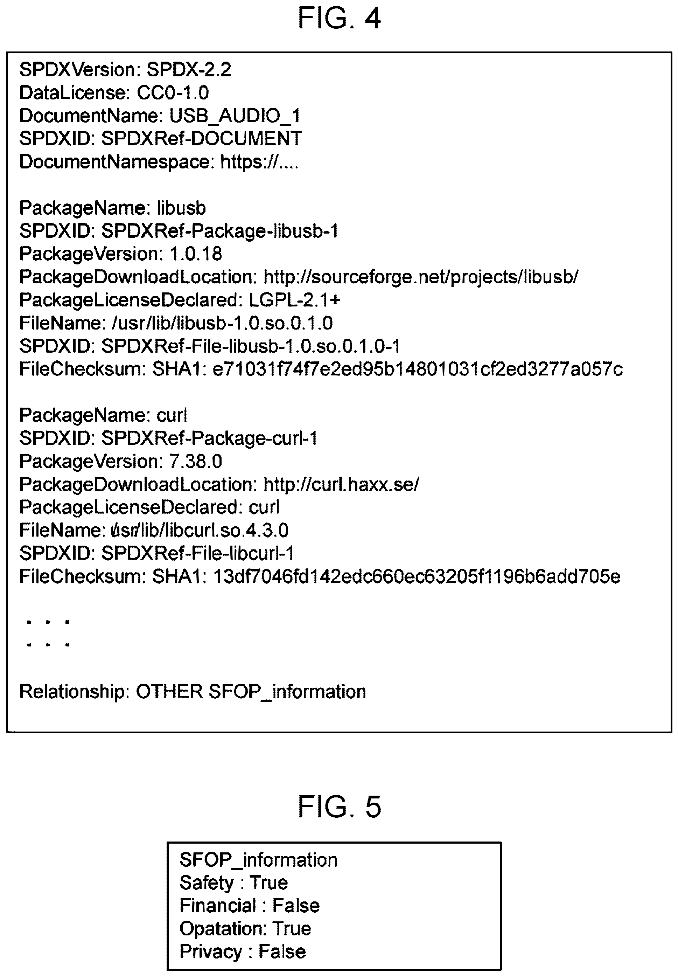

An example of the format of the specific SBOM 107 and available SBOM 108 will be described below. Fig. 3 is a diagram showing an example of the SBOM and available SBOM of the information processing system according to the embodiment. Fig. 4 is a diagram showing an example of the software information of the software for operating the additional hardware of the information processing system according to the embodiment.

As shown in Figs. 3 and 4, the SBOM 107, the available SBOM 108, and the S/W information in this example are written in the SPDX format. As shown in the drawings, the versions are all SPDX-2.2, and the data licenses are all CC0-1.0. Here, as an example, "USB_AUDIO_1" is added as the additional H/W to the SBOM 107 and available SBOM 108 of "IVI_1". "SPDXRef-DOCUMENT" is set for the SPDXID, and "https://...." is declared in the namespace.

As shown in Fig. 3, the SBOM 107 and the available SBOM 108 include a plurality of pieces of S/W information, including "linux_kernel", "glibc", and S/W (not shown). Although the details of each piece of S/W are omitted, for example, the S/W information of each piece of S/W includes "SPDXID", "PackageVersion (version of the S/W)", "PackageDownloadLocation (acquisition source of the S/W)", "PackageLicenseDeclared (license information of the S/W)", "PackageLicenseComments (additional information on the license of the S/W)", "FileName", "SPDXID", "FileChecksum (confirmation information on identity)", and the like. For example, from the viewpoint of addressing vulnerabilities in the S/W, the version of the S/W, the license information of the S/W, and the like are important, so that if the SBOM 107 and the available SBOM 108 include such information, other information does not have to be included. The SBOM 107 and the available SBOM 108 may not include the version of the S/W and the license information of the S/W, but instead may be composed only of other information depending on how the SBOM 107 and the available SBOM 108 are used.

As shown in Fig. 4, the S/W information of the S/W for operating the additional H/W includes a plurality of pieces of S/W information including "libusb", "curl", and S/W (not shown). Although the details of each piece of S/W are omitted, for example, the S/W information of the S/W for operating each additional H/W includes the same information as the SBOM 107 and the available SBOM 108. Further, the S/W information of the S/W for operating the additional H/W includes "OTHER SFOP_information" as the value of "Relationship", i.e., the information related to the SFOP in the function of the additional H/W. Here, the reference destination of the SFOP information for each function when referring to the SFOP information 109 of function is included as information.

Fig. 5 is a diagram showing an example of the SFOP information of the information processing system according to the embodiment.

As shown in Fig. 5, the SFOP information is composed of 4 values indicating: whether it corresponds to "Safety" (True) or not (False), whether it corresponds to "Financial" (True) or not (False), whether it corresponds to "Operational" (True) or not (False), and whether it corresponds to "Privacy" (True) or not (False). The example shown in Fig. 5 corresponds to "Safety" and "Operational" (True) and does not correspond to "Financial" and "Privacy" (False).

Such SFOP information is referred to in the deletion of S/W information from the available SBOM 108 to be described later.

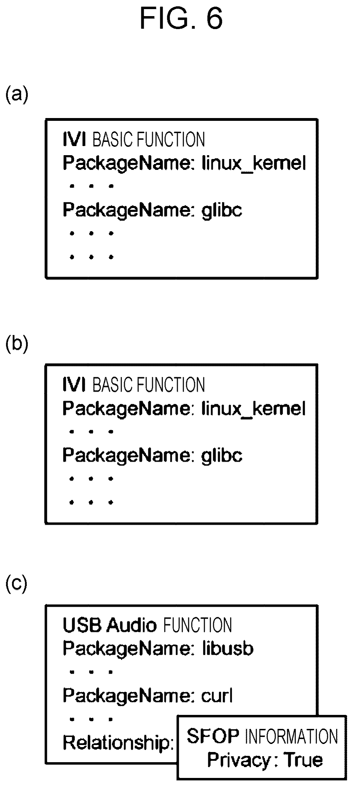

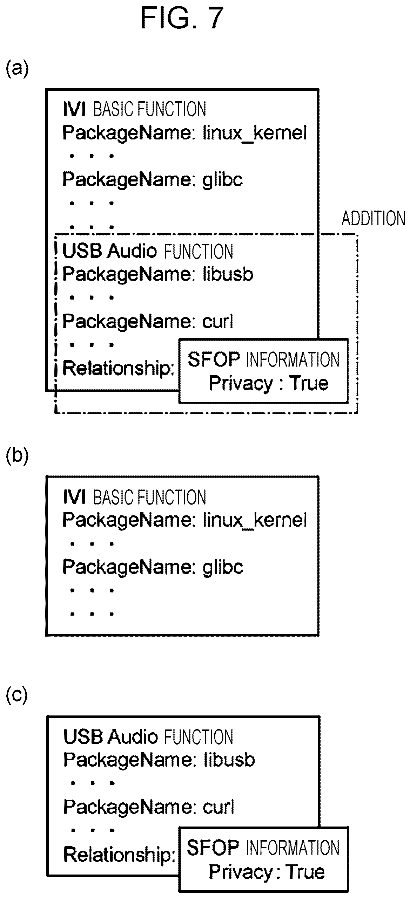

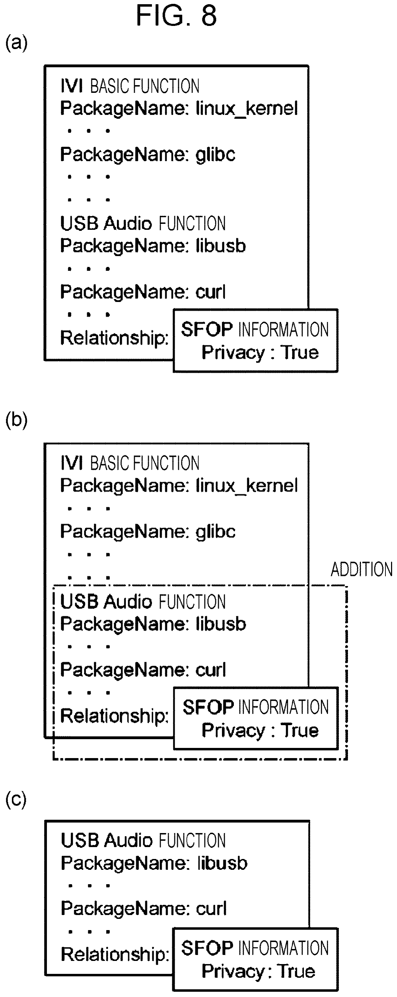

Here, Figs. 6 to 8 show changes in the SBOM, the available SBOM and the S/W information of the information processing system according to the embodiment. In Figs. 6 to 8, (a) shows the SBOM 107, (b) shows the available SBOM 108, and (c) shows the S/W information of the S/W for operating the additional H/W. Fig. 6 shows a state in which the H/W has not been added to the vehicle 100 yet; Fig. 7 shows a state in which the H/W has already been added to the vehicle 100 but the user has not contracted for the function yet; and Fig. 8 shows a state in which the H/W has been added to the vehicle 100 and the user has contracted for the function.

As shown in Figs. 6 to 8, when the H/W is added before the function is contracted, the S/W information of additional H/W is added only to the SBOM 107, and the S/W information of additional H/W is not added to the available SBOM 108. In such a state, when the user contracts for the function, the S/W information of additional H/W is added to the available SBOM 108, and the function to be executed by the H/W operation becomes available. Here, when the S/W information of additional H/W is added to the SBOM 107, the S/W information of additional H/W may be acquired either from the server 200 or from the SBOM 107. In other words, in a case where the S/W information of additional H/W is already added to the SBOM 107, when the contract of the function is made, the update of the available SBOM 108 is completed in the vehicle 100.

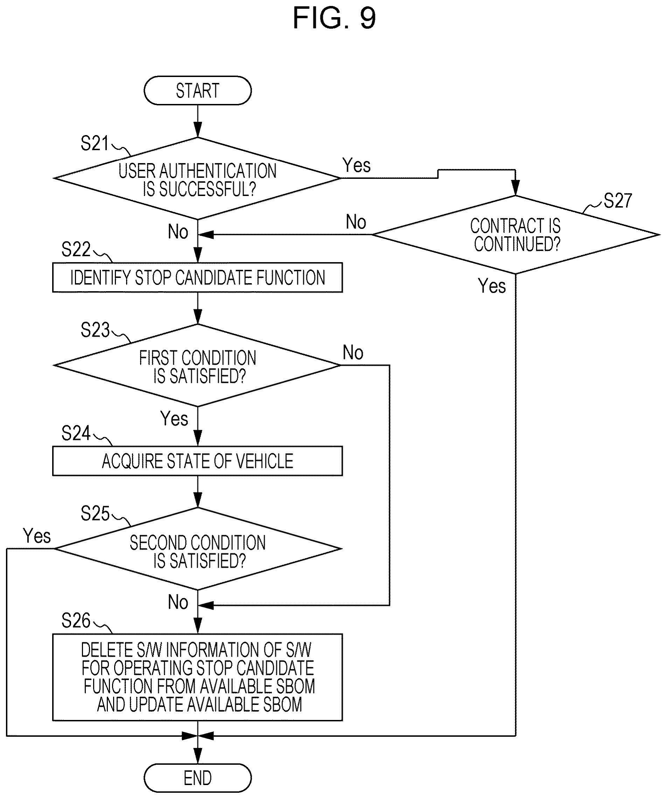

Next, another operation of the information processing system configured as described above will be described with reference to Fig. 9. Fig. 9 is a flowchart showing an example of an operation of re-authentication of the information processing system according to the embodiment. The flowchart of Fig. 9 shows an example in which the user authentication is performed again after the addition of the H/W has been completed in the flowchart of Fig. 2. For example, the operation shown in Fig. 9 is performed when the use of the vehicle 100 is terminated once and then the use is resumed again, or when the use of the vehicle 100 exceeds a certain time.

As shown in Fig. 9, the authentication unit 102 first performs re-authentication of the user (step S21). Here, if the user authentication is not successful ("No" in step S21), it means that the user currently using the vehicle 100 is a user other than the original user of the vehicle 100, and therefore, it is necessary to update the available SBOM 108 in accordance with the user currently using the vehicle 100. Here, an example in which the available SBOM 108 is added in the update is the same as described with reference to Fig. 2 and will not be repeated again here; an example in which the available SBOM 108 and S/W information are deleted in the update will be described.

If the user authentication is not successful ("No" in step S21), the SBOM management unit 101 identifies a stop candidate function (step S22). The identification of the stop candidate function is an example of a switching detection step that detects the switch of the S/W to inoperable. For example, the SBOM management unit 101 identifies a function to be switched to inoperable as a stop candidate function on the basis of the available SBOM 108 of the original user and the information of the function contracted by the user linked to the personal information of the current user.

Here, the SBOM management unit 101 determines whether the identified stop candidate function satisfies a predetermined first condition (step S23). The first condition is, for example, a function corresponding to "Safety" in the SFOP information that classifies the stop candidate function. Note that the first condition here is an example; and the first condition may be appropriately set according to the S/W management to be realized using the SBOM 107 and the available SBOM 108.

The SBOM management unit 101 refers to the SFOP information of the identified stop candidate function, determines that the predetermined first condition is satisfied if "Safety" is True ("Yes" in step S23), and acquires the state of the vehicle 100 (step S24). If "Safety" is True in the SFOP information of the identified stop candidate function, since switching the stop candidate function to inoperable may be related to safety, it is further determined whether or not to switch the stop candidate function to inoperable according to the state of the vehicle.

Therefore, the SBOM management unit 101 further determines whether or not the acquired state of the vehicle 100 satisfies a second condition (step S25). The second condition is that the acquired state of the vehicle 100 is a state not recommended for stopping the stop candidate function (for example, a state in which the vehicle 100 is running, a state the IG power is on, or the like). Note that the second condition here is an example; and the second condition may be appropriately set according to the S/W management to be realized using the SBOM 107 and the available SBOM 108.

If the SBOM management unit 101 determines that the acquired state of the vehicle 100 satisfies the predetermined second condition ("Yes" in step S25), the process is terminated. Thus, if the SBOM management unit 101 determines that the identified stop candidate function satisfies the predetermined first condition and satisfies the predetermined second condition, the SBOM management unit 101 prohibits switching the stop candidate function to inoperable.

On the other hand, the SBOM management unit 101 refers to the SFOP information of the identified stop candidate function, determines, if "Safety" is False, that the predetermined first condition is not satisfied ("No" in step S23), and proceeds to the deletion update step S26 without acquiring the state of the vehicle 100. Similarly, if the SBOM management unit 101 determines, based on the acquired state of the vehicle 100, that the predetermined second condition is not satisfied ("No" in step S25), the process proceeds to the deletion update step S26.

In the deletion update step S26, the S/W information of the S/W for operating the stop candidate function is deleted from the available SBOM 108, and the available SBOM 108 is updated. If the authentication of the user is successful ("Yes" in step S21), it is determined whether the contract for the function is continued for the user (step S27). If the contract for the function is not continued ("No" in step S27), that is, if there is a change from a state in which the user has a contract for the function to a state in which the user does not have the contract for the function, step S22 is executed to identify the function for which the contract is not continued as the stop candidate function. In a case where the authentication of the user is successful ("Yes" in step S21), if the contract for the function is continued for the user ("Yes" in step S27), the process is terminated.

Note that such re-authentication processing is executed periodically or as needed. In other words, if the start condition of re-authentication is satisfied after the process is terminated, the process is started again from step S21.

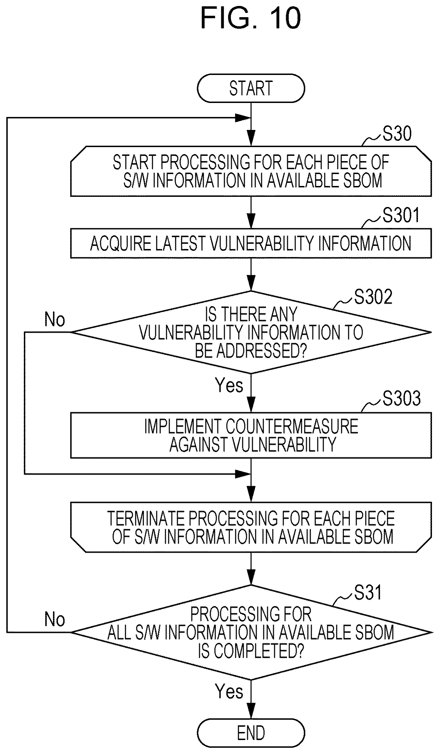

Next, another operation of the information processing system configured as described above will be described with reference to Fig. 10. Fig. 10 is a flowchart showing an example of an operation for addressing the vulnerability of the information processing system according to the embodiment.

In the present embodiment, how to address the vulnerability of the S/W installed in the vehicle 100 has been described using the available SBOM 108. In the operation example shown in Fig. 10, the operation of the information processing system in addressing the vulnerability will be described.

As shown in Fig. 10, first, for any one piece of S/W information in the available SBOM 108, processing for addressing the S/W information, i.e., software vulnerability management, is performed (vulnerability management step S30). In the vulnerability management step S30, the vulnerability database 206 is inquired about the S/W information to acquire the latest vulnerability information (step S301). Further, it is determined whether there is any vulnerability information that needs to be addressed (step S302); and if, for example, there is new vulnerability information in the vulnerability database, it is determined that there is vulnerability information that needs to be addressed ("Yes" in step S302), and countermeasures against the vulnerability are implemented (step S303). If it is determined that there is no vulnerability information that needs to be addressed ("No" in step S302), the vulnerability management step S30 is terminated. Further, it is determined whether or not the processing for all the S/W information included in the available SBOM 108 is completed (step S31), and if the processing for all the S/W information is not completed ("No" in step S31), the vulnerability management step S30 is started for the next S/W information. If the processing for all the S/W information is completed ("Yes" in step S31), the process is terminated.

Note that the processing to address vulnerabilities described above is executed periodically or as needed. That is, after the processing is terminated, if the conditions for starting the re-authentication are satisfied, the processing will start again from step S30.

### (Other embodiments)

The control device and the like according to the embodiment of the present disclosure have been described above; however, the present disclosure is not limited to such an embodiment.

For example, in the above embodiment, each component may be configured as dedicated hardware or may be realized by executing a software program suitable for each component. Each component may be realized by using a program executing unit, such as a CPU or a processor, to read and execute the software program recorded on a recording medium such as a hard disk or a semiconductor memory.

Further, each component may be a circuit (or an integrated circuit). These circuits may constitute one circuit as a whole, or may be separate circuits. Further, these circuits may each be a general-purpose circuit or a dedicated circuit.

Further, general or specific aspects of the present disclosure may be implemented as a system, a device, a method, an integrated circuit, a computer program, or a non-transitory computer-readable recording medium such as a CD-ROM. Alternatively, general or specific aspects of the present disclosure may be implemented as any combination of a system, a device, a method, an integrated circuit, a computer program, and a non-transitory computer-readable recording medium. Further, in the above embodiment, a process to be executed by a particular processing unit may be executed by other processing units. Further, the order of the plurality of processes in the operation of the communication system described in the above embodiment may be changed, or the plurality of processes may be executed in parallel.

In addition, the present disclosure also includes modes obtained by making various modifications conceivable by those skilled in the art with respect to the embodiment, or modes realized by any combinations of the components and the functions in the embodiment without departing from the spirit of the present disclosure.

### Industrial Applicability

The present disclosure is useful in managing S/W in a vehicle.

### Reference Signs List

100 vehicle
101 SBOM management unit
102 authentication unit
103 execution control unit
104 vulnerability management unit
105 camera
106 fingerprint authentication sensor
107 SBOM
108 available SBOM
109, 205 SFOP information of function
110 automatic driving system
111 audio player
200 server
201 user authentication information and user contract information
202 S/W information of additional H/W
203 SBOM of vehicle
204 available SBOM of vehicle
206 vulnerability database
300 wireless audio
301 wireless communication module
302 audio control unit
303 H/W authentication information
304 S/W

## Claims

1. An information processing method executed using a computer in a vehicle that switches whether or not each of equipped functions is to be made operable, depending on whether or not a user of the vehicle has a contract for the function, the information processing method comprising:
a detection step of detecting a new addition of software for operating one or more functions;
a determination step of determining whether or not the user has a contract for the function operated by the software, the new addition of which has been detected;
an acquisition step of acquiring software information corresponding to the software for which it is determined that the user has a contract; and
an update step of updating a software information list of functions operable in the vehicle by adding the acquired software information.

2. The information processing method according to claim 1, wherein
in the acquisition step, software information corresponding to the software for which it is determined that the user does not have a contract is acquired, and
in the update step,
the software information list of functions operable in the vehicle is updated by adding, among the acquired software information, the software information corresponding to the software for which it is determined that the user has a contract, and
an equipped software information list of functions equipped in the vehicle is updated by adding all of the acquired software information.

3. The information processing method according to claim 1, wherein, in the detection step, the new addition of the software is detected by installing hardware into the vehicle, wherein the hardware is operated by the software and executes the function corresponding to the software.

4. The information processing method according to claim 1, further comprising:
a switching detection step of detecting a change in state of one or more pieces of the software from an operable state to an inoperable state; and
a deletion update step of updating the software information list by deleting, from the software information list, the software information corresponding to the software whose change in state is detected.

5. The information processing method according to claim 4, wherein, in the switching detection step, the change in state of one or more pieces of the software to inoperable is detected by a change from a state in which the user has a contract for the function operated by the software to a state in which the user does not have the contract for the function operated by the software.

6. The information processing method according to claim 5, wherein the software information includes information related to a type of the function operated by the corresponding software.

7. The information processing method according to claim 6, wherein, in the deletion update step, when the information related to the type of the function operated by the software whose change in state is detected satisfies a first condition, the software information corresponding to the software whose change in state is detected is prohibited from being deleted from the software information list.

8. The information processing method according to claim 7, wherein, in the deletion update step, when the information related to the type of the function operated by the software whose change in state is detected satisfies the first condition and a state of the vehicle satisfies a second condition, the software information corresponding to the software whose change in state is detected is prohibited from being deleted from the software information list.

9. The information processing method according to any one of claims 1 to 8, further comprising:
a vulnerability management step of using the updated software information list to manage vulnerability of the software for operating the function operable in the vehicle.

10. The information processing method according to claim 9, wherein the vulnerability management step is executed every predetermined period.

11. An information processing device mounted on a vehicle that switches whether or not each of equipped functions is to be made operable, depending on whether or not a user of the vehicle has a contract for the function, the information processing device comprising:
a detection unit that detects a new addition of software for operating one or more functions;
a determination unit that determines whether or not the user has a contract for the function operated by the software, the new addition of which has been detected;
an acquisition unit that acquires software information corresponding to the software for which it is determined that the user has a contract;
a storage unit that stores a software information list of functions operable in the vehicle; and
an update unit that updates the stored software information list by adding the acquired software information.

12. A program that causes a computer to execute the information processing method according to claim 1.
